Europäisches Patentamt

European Patent Office

Office européen des brevets

(11) Publication number: **0 215 500 B1**

## EUROPEAN PATENT SPECIFICATION

(45) Date of publication of patent specification: **09.06.93** (51) Int. Cl.⁵: **G06F 15/50**, G07C 5/10, B63B 49/00

(21) Application number: **86201361.2**

(22) Date of filing: **01.08.86**

(54) Method and system for monitoring ship performance.

(30) Priority: **06.09.85 GB 8522208**

(43) Date of publication of application:
**25.03.87 Bulletin 87/13**

(45) Publication of the grant of the patent:
**09.06.93 Bulletin 93/23**

(84) Designated Contracting States:
**DE FR GB IT NL SE**

(56) References cited:
**EP-A- 0 136 828**
**GB-A- 2 075 687**
**GB-A- 2 113 424**
**US-A- 3 972 224**

(73) Proprietor: **SHELL INTERNATIONALE RE-
SEARCH MAATSCHAPPIJ B.V.
Carel van Bylandtlaan 30
NL-2596 HR Den Haag(NL)**

(72) Inventor: **Whipps, Sydney Leonard Shell Cen-
tre
2 York Road
Waterloo London SE1(GB)**
Inventor: **Eigenraam, Peter
Badhuisweg 3
NL1031 CM Amsterdam(NL)**

EP 0 215 500 B1

**Description**

The invention relates to a method and system for monitoring the performance of a ship.

Most ship operators will reluctantly admit that despite the strenuous effort of all concerned, the performance of their vessels after a few years of service is significantly below par in terms of grammes per shaft Horse Power hour and also nautical miles per tonne. Such units are common in the marchant navy and will be explained in the following. There are many known factors beyond the control of the ship's staff that may account for a fall-off in the ship's performance, including hull fouling and propeller roughness. Therefore it may be assumed that there is little those on board can do to contribute significantly to bunker conservation.

With respect to fuel consumption and fuel savings accurate propulsion plant tuning and hull tuning (i.e. optimization of the trim and ballast of the ship) are important activities. The objective of a tuning exercise is to optimize systematically a number of variables each of which will, in its own way, contribute to a sizeable overall reduction in efficiency if not correctly adjusted. To date it has been difficult for ship's staff to measure the effects of such tuning of the ship on short term and there is a need for a system with a fast response showing constantly the ship's overall performance, the propulsion plant performance and ship's hydrodynamic or hull performance so that those on board can react in a fast manner to a change in performance of the ship by taking appropriate measures.

The overall performance of a ship can be defined as the distance travelled through the water in nautical miles per tonne of fuel consumed (nmile/t). A nautical mile (nmile) is 1853 metres, whereas a tonne (t) is a metric tonne (= 1000 kg).

The propulsion plant performance can be expressed in terms of the grammes of fuel used per shaft Horse Power hour developed (g/SHPh), i.e. the specific fuel consumption of the plant. SHPh is a unit common in the merchant navy. Nowadays the power of an engine is still given in SHPh (1 HP.h = 2647 MJ).

The hull performance can be expressed in terms of metres travelled through the water per shaft Horse Power hour provided (m/SHPh).

It is therefore an object of the invention to provide an on-line method and a system for monitoring the overall performance of a ship, hull performance and efficiency of the engine, and thus any change in efficiency brought about by efforts of the ship's staff to conserve fuel.

An on-line system for enabling an operator to maximize the overall performance of a ship under prevailing conditions, comprising means (4) for determining a first quantity representative for the ship's speed; means (2) for determining a second quantity representative for the ship's fuel consumption; means (3a) for determining a third quantity representative for the torque in the ship's shaft; meaner (3b) for determining a fourth quantity representative for the number of shaft's revolutions, characterized by means for transmitting said quantities to a means for deriving from the values of the said quantities data representing the ship's specific fuel consumption expressing the propulsion plant performance, the ship's hydrodynamic or hull performance and the overall performance of the ship; and means for transmitting said values and data to means for constantly displaying the values and data, thus obtained; and providing an instantaneous response to performance change; thereby enabling said operator to detect said changes in performance and to optimize both the engine variables of the ship's propulsion plant and the hull variables such as trim and ballast, and wherein the specific fuel consumption is calculated by the equation: $SFC = F/_{P \times 1000}$, wherein: SFC is the specific fuel consumption, F is the fuel consumption in kg/hour and P is the shaft horsepower in HP; the hull performance is calculated by the equation: $H = S \times 1853/P$, wherein

H is the hull performance;

S is the speed in knots;

P is the shaft horsepower in HP; and

1853 is the conversion factor from nautical miles to metres; and

the overall performance is calculated by the equation: $O = S/F \times 1000$, wherein

O is the overall performance;

S is the speed in knots; and

F is the fuel consumption in kg/hour.

It will be appreciated that the quantities to be determined and the values and data to be displayed can be expressed in any common units suitable for the purpose, in proportion to the ship owner's wishes.

Usually in the merchant navy the ship's speed is expressed in knots (Kn) (1 Kn = one nautical mile per hour); the ship's fuel consumption in kg/hour; the shaft torque in (metric) tonne metre (tm); the number of shaft's revolutions or shaft speed in revolutions per minute (rev/min or rotations per minute (rpm); and as already indicated in the foregoing the ship's specific fuel consumption in grammes per SHPh (g/SHPh); the ship's hull performance in metres per SHPh (m/SHPh) and the ship's overall performance in nautical mile per (metric) tonne fuel (nmile/t).

An on-line method for enabling an operator to maximize the overall performance of a ship under prevailing conditions, comprising the steps of determining a first quantity representative for the ship's speed; determining a second quantity representative for the ship's fuel consumption; determining a third quantity representative for the torque in the ship's shaft; determining a fourth quantity representative for the number of shaft's revolutions; characterized by the steps of deriving in a processing means (1) from the values of the said quantities data representing the ship's specific fuel consumption expressing the propulsion plant performance, the ship's hydrodynamic or hull performance and the overall performance of the ship; displaying constantly the values and data thus obtained and providing an instantaneous response to performance change thereby enabling an operator to detect said changes in performance and to optimize both the engine variables of the ship's propulsion plant and the hull variables such as trim and ballast, and wherein the specific fuel consumption is calculated by the equation: $SFC = F/_{P \times 1000}$, wherein: SFC is the specific fuel consumption, F is the fuel consumption in kg/hour and P is the shaft horsepower in HP; the hull performance is calculated by the equation: $H = S \times 1853/P$, wherein

H is the hull performance;

S is the speed in knots;

P is the shaft horsepower in HP; and

1853 is the conversion factor from nautical miles to metres; and

the overall performance is calculated by the equation: $O = S/F \times 1000$, wherein

O is the overall performance;

S is the speed in knots; and

F is the fuel consumption in kg/hour.

In this manner a response to performance change can almost instantly be given and a significant saving (for example 10%) in ship fuel consumption can be obtained. For example, according to the invention a response to a 0.1% change in performance may be given within 5 seconds of the event.

It is remarked that GB-A-2,075,687 discloses a power plant efficiency monitoring system. However, this known system is not able to provide almost instantly a response to performance change to the observer and does not provide hull optimization.

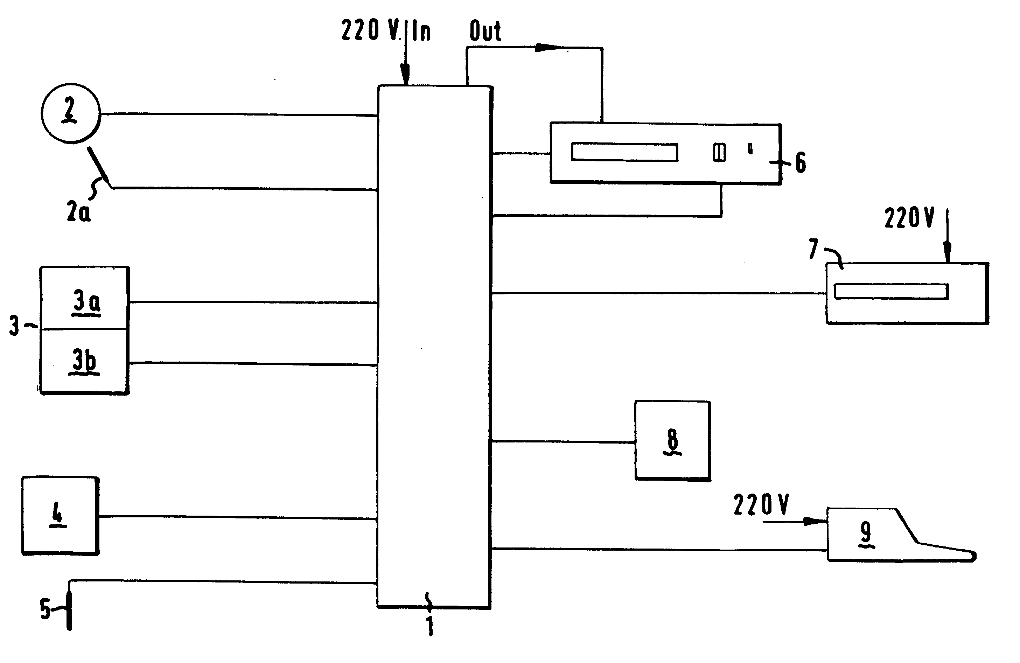

The invention will now be described by way of example in more detail with reference to the accompanying drawing in which the figure schematically represents the system of the invention. Such a system can be installed on board ship in any way suitable for the purpose.

With reference to the figure a processing means 1 is represented schematically. The processing means 1 is connected at its input side through any suitable connecting means to a fuel meter 2, a fuel temperature sensor 2a, a power meter 3 and a ship's speed measuring device 4 and a seawater temperature sensor 5 respectively. The power meter 3 comprises a means 3a for measuring the torque in the ship's shaft and a means 3b for measuring the number of shaft's revolutions (rotations per minute).

The processing means 1 is connected at its output side through any suitable connecting means to an engine control room display 6 and a remote wheelhouse display 7 respectively in order to display the parameters of interest. These displays may be digital displays. Further a recorder 8 and a computer 9 may be connected to the processing means 1 in any way suitable for the purpose. The wheelhouse display 7 can also be used to display the seawater temperature, which is measured by the sensor 5.

The ship performance data is available at the computer 9. At the output of the recorder 8 one out of ten variables at the time is available. Selection of the variable is done by a suitable means (for example, a thumbwheel selector switch) on the engine control room display.

The following variables (parameters) can be displayed: speed; fuel consumption; shaft speed or number of revolutions of the shaft; shaft torque; specific fuel consumption; hull performance; overall performance; shaft horse power; actual fuel density and fuel temperature. The speed (in knots) is obtained from the ship's speed measuring device 4 (for example a speed log); the fuel consumption is calculated by the equation: $FC = flow \times D \times 3600$ wherein FC is the fuel consumption in kg/hour, flow is the fuel flow in litres/second obtained from the fuel flow metre 2 and D is the corrected density (in $kg/m^3$); the number of revolutions (shaft speed) is obtained from the revolutions metre 3b and the torque (in tm) from the torque metre 3a; the specific fuel consumption is calculated by the equation: $SFC = F/_{P \times 1000}$ wherein: SFC is the specific fuel consumption, F is the fuel consumption in kg/hour and P is the shaft horse power in HP; the hull performance is calculated by the equation:

$H = S \times 1853/p$ wherein

H is the hull performance

S is the speed in knots

P is the shaft horse power in HP and

1853 is the conversion factor from nautical miles to metres;

the overal performance is calculated by the equation $O = S/F \times 1000$ wherein

O is the overall performance

S is the speed in knots

F is the fuel consumption in kg/hour;

the Shaft horse power is calculated by the equation $P = (2 \pi nN)/(60 C)$ wherein P is the shaft horse power in HP, n is the rotational speed of the shaft in RPM, N is the torque in the shaft in Nm (or in (metric) tonne metres) and c is the conversion factor from Watts to HP = 735,5 Watt/HP; the actual fuel density is calculated by the equation $D^1 = D \times ((1-0,0007) \times (T-15))$ wherein

$D^1$ is the actual density (in $Kg/m^3$)

D is the density, at 15 deg C (bunker specification), obtained for example from thumbwheel switches on the engine control room display, and

T is the actual fuel temperature (in $^\circ$C); and the fuel temperature is obtained from the fuel temperature sensor 2a.

The operation of the system is as follows. Quantities representative for the ship's fuel consumption, torque and number of shaft's revolutions respectively are determined by the fuel meter 2 and the power meter 3 respectively. These quantities are transmitted to the processing means 1 through the connecting means at its input side and from the values of these quantities data representing the specific fuel consumption of the ship's propulsion plant is calculated.

To be able to display the correct plant and overall performance the weight of the fuel must be known. Fuel density must be known as well since weight = volume x actual density and the system is supplied with suitable means for input of the fuel density (not shown). Density correction for differences in fuel temperature is performed by the system.

Quantities representative for the shaft power and the travelled distance respectively are determined by the power meter 3 and the speed measuring device 4. These quantities are transmitted to the input of the processing means through the respective connecting means and from the values of these quantities data representing the hydrodynamic or hull performance of the ship are derived.

From the data thus obtained the overall performance can be derived. Data of interest can be displayed at the displays 6, 7 and the recorder 8. During normal sailing conditions the engine control room display 6 shows the ship performance variables. The display 7 shows the ship performance variables and the seawater temperature. In the normal operation the indicators of the displays show simultaneously:

specific fuel consumption (in g/SHP.h)

hull performance (in m/SHP.h)

overall performance (in nmile/t).

The reading may be updated regularly, for example every 5 seconds. As these performance parameters are only relevant whilst the ship is on route, the information presented on the display units may be, if necessary, switched to present the "in-port" consumption in (metric) tonne/day when the shaft speed falls to zero. Programmes for the computer 9 have been developed to provide several suitable display and recording modes, for example:

1. Sailing mode; wherein the principle parameters obtained and computed by the system are displayed on the screen of the display units and, on request, can be recorded on an integral printer for administration purposes;

2. Tuning mode, wherein the performance parameters are tabulated and updated in a scrolling screen format at a frequency of the operator's choice (for example, between 1 minute and 9 hours); and

3. Graphics mode, wherein any parameter may be selected for graphical presentation on a selectable timebase (for example between 30 minutes and 9 hours).

Table A represents a reproduction of the data of interest and their units on a display screen in the sailing mode:

## Table A

Engine performance:

    Spec. fuel con:       g/shph

    Fuel con.            t/h

    Fuel con.            t/day

    Power               shp

Hydrodynamic performance:

    Dist./power       m/shph

    Speed             knots

Composite performance:

    Consumption       nmile/t

Table B represents a reproduction of a display screen in the tuning mode:

## Table B

| Time min. | Speed kn | SFC g/shph | Fuel t/h | Power shp | D/P m/shph |
|---|---|---|---|---|---|
| -0 | 11.8 | 280 | 3.40 | 10.8 | 1.333 |
| -10 | 11.8 | 280 | 3.40 | 10.8 | 1.333 |
| -20 | 11.8 | 280 | 3.40 | 10.8 | 1.333 |
| -30 | 11.8 | 280 | 3.40 | 10.8 | 1.333 |
| -40 | 11.8 | 280 | 3.40 | 10.8 | 1.333 |
| -50 | 11.8 | 280 | 3.40 | 10.8 | 1.333 |
| -60 | 11.8 | 280 | 3.40 | 10.8 | 1.333 |
| -70 | 11.8 | 280 | 3.40 | 10.8 | 1.333 |
| -80 | 11.8 | 280 | 3.40 | 10.8 | 1.333 |
| -90 | 11.8 | 280 | 3.40 | 10.8 | 1.333 |

This constant display of the ship performance variables enables the ship's staff to maximise the performance of the ship under prevailing conditions in that staff is enabled to give an accurate and quick response to change in performance and in this manner are able to make significant fuel savings (for example 10-15%). For example, the ship's propulsion plant can be tuned for optimizing the ship's operation. This could, for example, be done by systematic optimization of the engine variables (such as for example, charge air temperature, fuel viscosity and coolant temperature). Similarly, the hull variables (such as trim and ballast) could be optimized. It is possible to detect very small differences in the efficiency of both the engine and of the hull/propeller even when comparatively large variations occur in the operating conditions which one generally has no control, i.e. changing sea state, ambient air temperature etc.

In an advantageous embodiment of the invention data of interest can be stored independent on the selected mode of operation on a suitable medium (for example on cassette tape) and can be studied later.

5

Such "action replay" facility is particularly useful when, for example, it is necessary to provide the "office" with a detailed record of events either on a routine basis or as part of a special trials programme.

It will be appreciated that data of interest can be displayed at any remote location suitable for the purpose.

## Claims

1.  An on-line system for enabling an operator to maximize the overall performance of a ship under prevailing conditions, comprising means (4) for determining a first quantity representative for the ship's speed; means (2) for determining a second quantity representative for the ship's fuel consumption; means (3a) for determining a third quantity representative for the torque in the ship's shaft; means (3b) for determining a fourth quantity representative for the number of shaft's revolutions, characterized by means for transmitting said quantities to a means for deriving from the values of the said quantities data representing the ship's specific fuel consumption expressing the propulsion plant performance, the ship's hydrodynamic or hull performance and the overall performance of the ship; and means for transmitting said values and data to means for constantly displaying the values and data, thus obtained; and providing an instantaneous response to performance change; thereby enabling said operator to detect said changes in performance and to optimize both the engine variables of the ship's propulsion plant and the hull variables such as trim and ballast, and wherein the specific fuel consumption is calculated by the equation: $SFC = F/_{P \times 1000}$, wherein: SFC is the specific fuel consumption, F is the fuel consumption in kg/hour and P is the shaft horsepower in HP; the hull performance is calculated by the equation: $H = S \times 1853/P$, wherein

    H is the hull performance;

    S is the speed in knots;

    P is the shaft horsepower in HP; and

    1853 is the conversion factor from nautical miles to metres; and

    the overall performance is calculated by the equation: $O = S/F \times 1000$, wherein

    O is the overall performance;

    S is the speed in knots; and

    F is the fuel consumption in kg/hour.

2.  The system as claimed in claim 1 characterized by means for storing the said determined quantities and calculated data.

3.  The system as claimed in claims 1 or 2 characterized by display means at the ship's wheelhouse.

4.  The system as claimed in any one of claims 1-3 characterized by display means at the ship's engine control room.

5.  The system as claimed in any one of claims 1-4 characterized by means for tuning the ship's engine variables and/or hull variables for optimizing the ship's operation.

6.  An on-line method for enabling an operator to maximize the overall performance of a ship under prevailing conditions, comprising the steps of determining a first quantity representative for the ship's speed; determining a second quantity representative for the ship's fuel consumption; determining a third quantity representative for the torque in the ship's shaft; determining a fourth quantity representative for the number of shaft's revolutions; characterized by the steps of deriving in a processing means (1) from the values of the said quantities data representing the ship's specific fuel consumption expressing the propulsion plant performance, the ship's hydrodynamic or hull performance and the overall performance of the ship; displaying constantly the values and data thus obtained and providing an instantaneous response to preformance change thereby enabling an operator to detect said changes in performance to optimize both the engine variables of the ship's propulsion plant and the hull variables such as trim and ballast, and wherein the specific fuel consumption is calculated by the equation: $SFC = F/_{P \times 1000}$, wherein: SFC is the specific fuel consumption, F is the fuel consumption in kg/hour and P is the shaft horsepower in HP; the hull performance is calculated by the equation: $H = S \times 1853/P$, wherein

    H is the hull performance;

    S is the speed in knots;

6

P is the shaft horsepower in HP; and

1853 is the conversion factor from nautical miles to metres; and

the overall performance is calculated by the equation: O = S/F x 1000, wherein

O is the overall performance;

S is the speed in knots; and

F is the fuel consumption in kg/hour.

7. The method as claimed in claim 6 characterized by the step of storing the said determined quantities and calculated data.

8. The method as claimed in claims 6 or 7 characterized by the step of tuning the ship's engine variables and/or hull variables for optimizing the ship's operation.

**Patentansprüche**

1. On-line-Vorrichtung, um es einer Bedienungsperson zu ermöglichen, die Gesamtleistung eines Schiffes unter gegebenen Bedingungen zu maximieren, umfassend eine Einrichtung (4) zum Bestimmen einer ersten Größe, welche die Geschwindigkeit des Schiffes darstellt, eine Einrichtung (2) zum Bestimmen einer zweiten Größe, welche den Brennstoffverbrauch des Schiffes darstellt, eine Einrichtung (3a) zum Bestimmen einer dritten Größe, welche das Drehmoment in der Welle des Schiffes darstellt, und eine Einrichtung (3b) zum Bestimmen einer vierten Größe, welche die Anzahl der Umdrehungen der Welle darstellt, gekennzeichnet durch eine Einrichtung zum Übertragen der genannten Größen zu einer Einrichtung, um von den Werten der genannten Größen Daten abzuleiten, welche den spezifischen Brennstoffverbrauch des Schiffes darstellen, welcher die Leistung der Vortriebsanlage, die hydrodynamische Leistung des Schiffes bzw. die hydrodynamische Leistung des Schiffskörpers oder Schiffsrumpfes und die Gesamtleistung des Schiffes ausdrückt, und eine Einrichtung zum Übertragen der genannten Werte und Daten zu einer Einrichtung, um diese Werte und Daten, die auf die genannte Weise erhalten sind, konstant anzuzeigen und ein augenblickliches Ansprechen auf eine Leistungsänderung zu schaffen, wodurch es der Bedienungsperson ermöglicht wird, die Leistungsänderungen festzustellen und die Maschinenvariablen der Vortriebsanlage des Schiffes und die Schiffskörpervariablen wie Trimmung und Ballast zu optimieren, wobei der spezifische Brennstoffverbrauch durch die nachstehende Gleichung berechnet ist:

$$SFC = F/_{p\ x\ 1000,}$$

worin:

SFC der spezifische Brennstoffverbrauch,

F der Brennstoffverbrauch in kg/h und

P die Wellenleistung in PS ist,

die Leistung des Schiffskörpers oder Schiffsrumpfes durch die nachstehende Gleichung berechnet ist:

$$H = S\ x\ 1853/P,$$

worin:

H die Leistung des Schiffskörpers oder Schiffsrumpfes,

S die Geschwindigkeit in Knoten,

P die Leistung der Welle in PS, und

1853 der Faktor zur Umwandlung von Seemeilen in Meter ist, und wobei die Gesamtleistung durch die nachstehende Gleichung berechnet ist:

$$O = S/F\ x\ 1000,$$

worin:

O die Gesamtleistung,

S die Geschwindigkeit in Knoten, und

F der Brennstoffverbrauch in kg/h ist.

**2.** Vorrichtung nach Anspruch 1,
gekennzeichnet durch eine Einrichtung zum Speichern der bestimmten Größen und der berechneten Daten.

**3.** Vorrichtung nach Anspruch 1 oder 2,
gekennzeichnet durch eine Ahzeigeeinrichtung im Ruderhaus des Schiffes.

**4.** Vorrichtung nach irgendeinem der Ansprüche 1 bis 3,
gekennzeichnet durch eine Anzeigeeinrichtung im Maschinensteuerraum des Schiffes.

**5.** Vorrichtung nach irgendeinem der Ansprüche 1 bis 4,
gekennzeichnet durch eine Einrichtung zum Einstellen oder Anpassen der Maschinenvariablen und/oder der Schiffskörpervariablen des Schiffes zum Optimieren des Betriebes des Schiffes.

**6.** On-line-Verfahren, um es einer Bedienungsperson zu ermöglichen, die Gesamtleistung eines Schiffes unter herrschenden Bedingungen zu maximieren, umfassend die Schritte des Bestimmens einer ersten Größer welche die Geschwindigkeit des Schiffes darstellt, des Bestimmens einer zweiten Größe, welche den Brennstoffverbrauch des Schiffes darstellt, des Bestimmens einer dritten Größe, welche das Drehmoment in der Welle des Schiffes darstellt, und des Bestimmens einer vierten Größe, welche die Anzahl der Umdrehungen der Welle darstellt,
gekennzeichnet durch die Schritte des Ableitens von Daten aus den Werten der genannten Größen in einer Verarbeitungseinrichtung (1), wobei die Daten den spezifischen Brennstoffverbrauch des Schiffes darstellen, der die Leistung der Vortriebsanlage, die hydrodynamische Leistung bzw. die hydrodynamische Leistung des Schiffskörpers oder des Schiffsrumpfes und die Gesamtleistung des Schiffes ausdrückt, des konstanten Darstellens der genannten Werte und Daten, die auf diese Weise erhalten sind, und des Schaffens eines augenblicklichen Ansprechens auf eine Leistungsänderung, wodurch es einer Bedienungsperson ermöglicht wird, die Leistungsänderungen festzustellen, um die Maschinenvariablen der Vortriebsanlage des Schiffes und die Schiffskörpervariablen, wie beispielsweise Trimmung und Ballast, zu optimieren, wobei der spezifische Brennstoffverbrauch durch die nachstehende Gleichung berechnet wird:

$SFC = F/_{P \times 1000}$, worin SFC der spezifische Brennstoffverbrauch, F der Brennstoffverbrauch in kg/h und P die Wellenleistung in PS ist, die Schiffskörperleistung durch die nachstehende Gleichung berechnet wird:

$H = S \times 1853/P$,

worin:
H die Leistung des Schiffskörpers oder Schiffsrumpfes,
S die Geschwindigkeit in Knoten,
P die Leistung der Welle in PS, und
1853 der Faktor zur Umwandlung von Seemeilen in Meter ist, und wobei
die Gesamtleistung durch die nachstehende Gleichung berechnet wird:

$O = S/F \times 1000$,

worin:
O die Gesamtleistung,
S die Geschwindigkeit in Knoten, und
F der Brennstoffverbrauch in kg/h ist.

**7.** Verfahren nach Anspruch 6,
gekennzeichnet durch den Schritt des Speicherns der bestimmten Größen und der berechneten Daten.

**8.** Verfahren nach Anspruch 6 oder 7,
gekennzeichnet durch den Schritt des Einstellens oder Abstimmens der Maschinenvariablen und/oder der Schiffskörpervariablen des Schiffes zum Optimieren des Betriebes des Schiffes.

**Revendications**

1.  Un système en ligne pour permettre à un opérateur de porter à leur plus haut niveau les performances d'ensemble d'un navire dans les conditions existantes, comprenant des moyens (4) pour déterminer une première quantité représentative de la vitesse du navire ; des moyens (2) pour déterminer une deuxième quantité représentative de la consommation de combustible du navire ; des moyens (3a) pour déterminer une troisième quantité représentative du couple dans l'arbre du navire ; des moyens (3b) pour déterminer une quatrième quantité représentative de la vitesse de rotation de l'arbre, Caractérisé par des moyens pour transmettre ces quantités à un moyen pour déduire des valeurs de ces quantités des informations représentant la consommation spécifique de combustible du navire exprimant les performances de l'unité de propulsion, les performances hydrodynamiques ou de la carène du navire et les performances d'ensemble du navire ; et des moyens pour transmettre ces valeurs et informations à des moyens pour afficher constamment les valeurs et informations ainsi obtenues et fournir une réponse instantanée aux changements des performances, permettant ainsi à l'opérateur de détecter ces changements dans les performances et d'optimiser tant les variables concernant les machines de l'unité de propulsion que les variables concernant la carène comme l'assiette et le lest, et où la consommation spécifique de combustible est calculée par l'équation :
    $SFC = F_{p \times 1000}$, où SFC est la consommation spécifique de combustible, F est la consommation de combustible en kg/heure et P est la puissance à l'arbre en chevaux (HP); les performances de la carène sont calculées par l'équation :
    $H = S \times 1853/P$, où H représente les performances de la carène ; S est la vitesse en noeuds ; P est la puissance à l'arbre en chevaux (HP) ; et 1853 est le facteur de conversion pour passer des milles marins aux mètres ; et les performances d'ensemble sont calculées par l'équation :
    $O = S/F \times 1000$, où O représente les performances d'ensemble ; S est la vitesse en noeuds ; et F est la consommation de combustible en kg/heure.

2.  Un système selon la revendication 1, caractérisé par des moyens pour emmagasiner les quantités déterminées et les informations calculées.

3.  Un système selon les revendications 1 ou 2, caractérisé par des moyens d'affichage à la timonerie du navire.

4.  Un système selon l'une quelconque des revendications 1-3, caractérisé par des moyens d'affichage à la salle de commande des machines du navire.

5.  Un système selon l'une quelconque des revendications 1-4, caractérisé par des moyens pour régler les variables des machines du navire et/ou les variables de la calandre de manière à optimiser le fonctionnement du navire.

6.  Une méthode en ligne pour permettre à un opérateur d'optimiser les performances d'ensemble d'un navire dans les conditions existantes, comprenant les étapes selon lesquelles on détermine une première quantité représentative de la vitesse du navire ; on détermine une deuxième quantité représentative de la consommation de combustible du navire ; on détermine une troisième quantité représentative du couple dans l'arbre du navire ; on détermine une quatrième quantité représentative de la vitesse de rotation de l'arbre ; caractérisée par les étapes selon lesquelles on déduit des valeurs de ces quantités des informations représentant la consommation spécifique de combustible du navire, exprimant les performances de l'installation de propulsion, les performances hydrodynamiques ou de la carène du navire et les performances d'ensemble du navire ; on affiche constamment les valeurs et informations ainsi obtenues et on fournit une réponse instantanée aux changements des performances, permettant ainsi à un opérateur de détecter ces changements dans les performances et d'optimiser tant les variables concernant la machine de l'installation de propulsion du navire que les variables concernant la carène comme l'assiette et le lest, et où la consommation spécifique de combustible est calculée par l'équation :
    $SFC = F/_{P \times 1000}$, où SFC est la consommation spécifique de combustible, F est la consommation de combustible en kg/heure et P est la puissance à l'arbre en chevaux (HP) ; les performandes de la carène sont calculées par l'équation :
    $H = S \times 1853/P$, où H représente les performances de la carène, S est la vitesse en noeuds ; P est la puissance à l'arbre en chevaux (HP) ; et 1853 est le facteur de conversion des milles marins en mètres

; et

les performances d'ensemble sont calculées par l'équation :

O = S/F x 1000, où O représente les performances d'ensemble ; S est la vitesse en noeuds ; et F est la consommation de combustible en kg/heure.

**7.** Une méthode selon la revendication 6, caractérisée par l'étape selon laquelle on emmagasine lesdites quantités déterminées et informations calculées.

**8.** Une méthode selon les revendications 6 àu 7, caractérisée par l'étape de réglage des variables des machines du navire et/ou des variables de la carène de manière à optimiser la marche du navire.